# EUROPEAN PATENT SPECIFICATION

(11) **EP 2 158 743 B1**
(45) Date of publication and mention of the grant of the patent: **21.06.2017**
(21) Application number: 08779613.2
(22) Date of filing: 05.05.2008
(51) Int. Cl.: H04L 29/08, H04L 29/06

(54) **TECHNIQUES FOR COMMUNICATING DATA BETWEEN A HOST DEVICE AND AN INTERMITTENTLY CONNECTED MOBILE DEVICE**
VERFAHREN ZUM DATENAUSTAUSCH ZWISCHEN EINER HOST-VORRICHTUNG UND EINER INTERMITTIEREND ANGESCHLOSSENEN MOBILEN VORRICHTUNG
TECHNIQUE DE COMMUNICATION DE DONNÉES ENTRE UN DISPOSITIF HÔTE ET UN DISPOSITIF MOBILE CONNECTÉ PAR INTERMITTENCE

(30) Priority: 08.06.2007 US 760686
(43) Date of publication of application: 03.03.2010
(73) Proprietor: APPLE INC., Cupertino, CA 95014 (US)
(72) Inventor: GALLOWAY, Curtis, C., Santa Cruz, CA 95062 (US); GIES, Sean, M., San Francisco, CA 94133 (US)
(74) Representative: Schmalz, Günther
(86) International application number: PCT/US2008/005807
(87) International publication number: WO 2008/153638

(56) References cited:
- EP-A- 1 569 491
- WO-A-99/39488
- WO-A-2006/133764
- US-A1- 2005 102 537

## Description

### TECHNICAL FIELD

Embodiments of the invention relate to communicating data between devices. More particularly, embodiments of the invention relate to techniques for efficiently communicating data between one or more host electronic devices and an intermittently connected client device.

### BACKGROUND

With the increasing popularity of mobile devices (e.g., mobile phones, digital music players, digital personal assistants), the functionality provided by a single mobile device has increased. This increase in functionality has an associated motivation to provide synchronization services in order to, for example, mirror changes to data made on either the mobile device or the host device.

Various techniques have been developed to synchronize data between a mobile device and a host device. Current techniques are typically either full-function file system based techniques that may require more overhead than necessary or may be specific-purpose techniques that provide limited functionality. Either of these solutions is less than optimal

Prior art document WO2006133764 discloses a method for establishing a paired connection across a network between media devices including a digital camera device.

### SUMMARY

Techniques for communicating between a host device and a client device comprising are disclosed. A reliable stream is established to provide a connection between the host device and the client device over a communications link. Data is synchronized between the host device and the client device by transmitting packets according to the reliable stream transport over the communications link. The packets include an indication of a packet type having a predetermined packet format corresponding to the packet type and a packet functionality associated with the packet type. A method for communication according to claim 1, a machine readable storage medium having executable instructions according to claim 13, and an apparatus according to claim 14 define the invention, with various embodiments as defined in the dependent claims.

### BRIEF DESCRIPTION OF THE DRAWINGS

The invention is illustrated by way of example, and not by way of limitation, in the figures of the accompanying drawings in which like reference numerals refer to similar elements.
**Figure 1** is a block diagram of a host electronic device and client electronic device that may communicate utilizing the techniques described herein.
**Figure 2** is a block diagram of one embodiment of a data processing system, such as a host device.
**Figure 3** is a block diagram of one embodiment of a data processing system, such as a client device, a handheld computer or other type of data processing system.
**Figure 4** is a table of a packet header that may be used in communication between a host electronic device and a client electronic device.
**Figure 5** is a table of a packet types that may be used in communication between a host electronic device and a client electronic device.
**Figure 6** is a flow diagram of one embodiment of a technique to transfer data to a client device.
**Figure 7** is a flow diagram of one embodiment of a technique to synchronize data between a host device and a client device.

### DETAILED DESCRIPTION

In the following description, numerous specific details are set forth. However, embodiments of the invention may be practiced without these specific details. In other instances, well-known circuits, structures and techniques have not been shown in detail in order not to obscure the understanding of this description.

Described herein is a relatively simple protocol for transferring files and other data between endpoints. In one embodiment, the endpoints are a host electronic device and a client electronic device. The host electronic device may be, for example, a desktop computer system or a laptop computer system. The client electronic device may be for example, a laptop computer system, a personal digital assistant, a cellular-enabled device (e.g., a cellular telephone or smartphone).

In one embodiment, the connection between the end points utilizes a reliable stream transport, for example, a Transmission Control Protocol (TCP) stream connection. Other stream connections may also be supported. In one embodiment, communication is accomplished utilizing packets that have a header and a body. Described herein in one embodiment of a standard minimum header, but a header may contain additional packet-specific structured data. The packet data may include unstructured data, or may be empty.

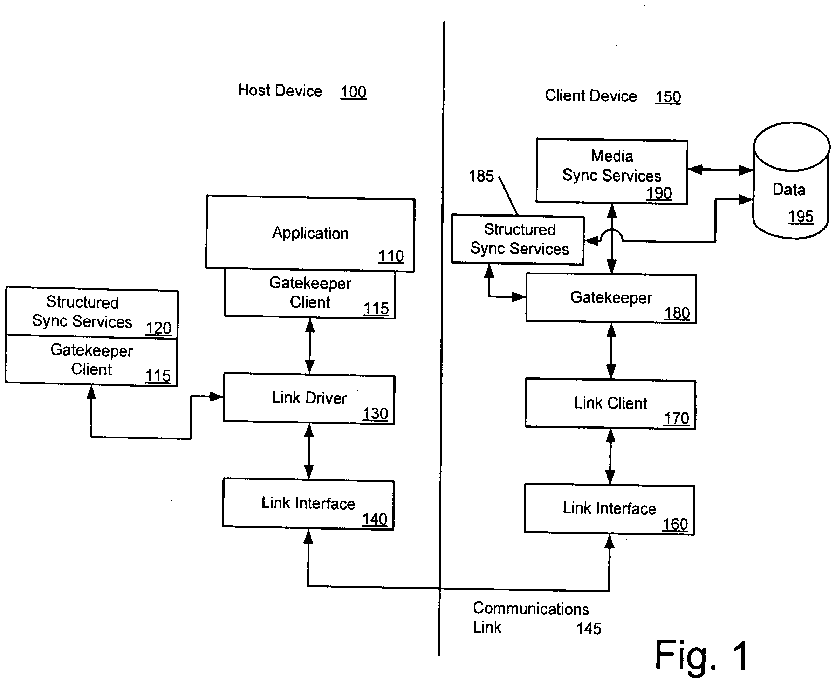

**Figure 1** is a block diagram of a host electronic device and client electronic device that may communicate utilizing the techniques described herein. The block diagram of Figure 1 provides a conceptual illustration of the components that may be utilized to communicate between host device 100 and client device 150. In one example, host device 100 is a computer system (e.g., a desktop or a laptop computer system) and client device 150 is a mobile device (e.g., a PDA or a smartphone). Host device 100 and client device 150 may communicate via any type of communications technique known in the art. For example, communications link 145 may be a physical cable (e.g., a Universal Serial Bus compliant cable), or a wireless communications link (e.g., Bluetooth® compliant or IEEE 802.11 compliant). Bluetooth® is a registered trademark owned by Bluetooth SIG, Inc.

Application 110 may be any type of application that may be executed by host device 100. For example, application 110 may be iTunes available from Apple Inc of Cupertino, California. Application 110 may include functionality and/or data that may be communicated to and/or synchronized with client device 150. For example, application 110 may store and/or play multimedia content that may be stored on or played by client device 150. When client device 150 communicates with host device 100, application 110 may cause content to be transferred between host device 100 and client device 150. Other types of applications may also be supported.

Gatekeeper client 115 interacts with application 110 to control access to communications link 145 by application 110. Gatekeeper client 115 may selectively limit access to communications link 145 based on one or more parameters. Gatekeeper client 115 may, for example, perform authentication and/or validation operations prior to allowing communications between host device 100 and client device 150. Gatekeeper client 115 may also select one of multiple communications link for communication between host device 100 and client device 150. While the example of Figure 1 is described with the gatekeeper functionality, alternate embodiments may be provided without the gatekeeper functionality.

Gatekeeper client 115 may communicate with link driver 130 to access communications link 145 via link interface 140. In one embodiment, link driver 130 interacts with structured sync services 120 to provide synchronization functionality between host device 100 and client device 150. In one embodiment, structured sync services 120 may function utilizing the commands and protocols described in greater detail below. Link driver 130 may cause link interface 140 to cause signals (e.g., electrical, radio frequency, infrared, optical) representing data to be transmitted over communications link 145.

Within client device 150, link interface 160 is the counterpart to link interface 140. Link interface 160 may send and/or receive signals (e.g., electrical, radio frequency, infrared, optical) via communications link 145. Client device 150 also includes gatekeeper 180 that may perform authentication, validation and/or other authorization functions before allowing communication between application 110 on host device 100 and media sync services 190 on client device 150.

In one embodiment, media sync services 190 may support the messages and protocols described in greater detail below to allow access (e.g., read, write, modify, update) of data 195. Data 195 represents any type of data stored on client device 150. Data 195 may be one or more databases, tables and/or other storage elements. Data 195 may be, for example, media files (e.g., audio and/or video data files), metadata, contact information, historical information (e.g., call logs, software version information) and/or status information (e.g., battery capacity, serial number, total memory, available memory).

Client device 150 may also include structured data services 185, which may maintain data on client device 150. Examples of data that may be synchronized and/or maintained utilizing structured sync services 120 and structured data services 185 may include bookmarks, contact information, calendar information, etc.

In one embodiment, communication between host device 100 and client device 150 to allow application 110 to access data 190 may be accomplished through structured sync services 120 and media sync services 190 utilizing specific data packet formats described in greater detail below. In one embodiment, communications link 145 may be a Universal Serial Bus (USB) compliant wired communications link between host device 100 and client device 150. In one embodiment, the connection between host device 100 and client device 150 utilizes a TCP stream connection over the USB compliant physical connection to transmit the packets described below.

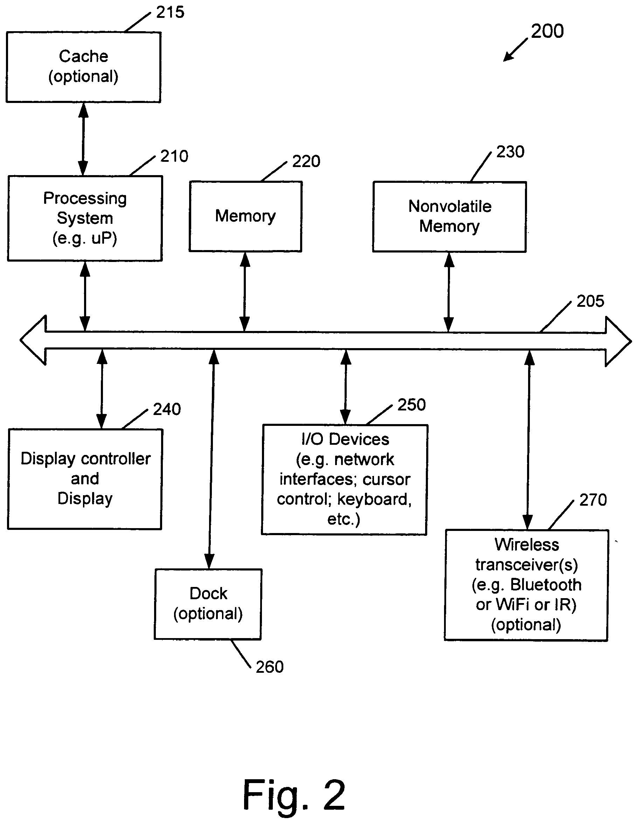

**Figure 2** is a block diagram of one embodiment of a data processing system, such as a host device. Note that while **Figure 2** illustrates various components of a computer system, it is not intended to represent any particular architecture or manner of interconnecting the components as such details are not germane to the present inventions. It will also be appreciated that personal digital assistants (PDAs), cellular telephones, media players (e.g. an iPod), devices which combine aspects or functions of these devices (a media player combined with a PDA and a cellular telephone in one device), network computers, an embedded processing device within another device, and other data processing systems which have fewer components or perhaps more components may also be used to implement one or more embodiments of the present inventions and may be one or more of the data processing systems described herein. The computer system shown in **Figure 2** may, for example, be a Macintosh computer from Apple Inc. or a computer which runs the Windows operating software from Microsoft Corporation.

Computer system 200 includes bus 205 which is coupled to one or more microprocessors which form processing system 210. Bus 205 is also coupled to memory 220 and to a non-volatile memory 230, which may be a magnetic hard drive in certain embodiments, or flash memory in other embodiments. Bus 205 is also coupled to display controller and display 240 and one or more input/output (I/O) devices 250.

Further, bus 205 may be coupled to optional dock 260 and to one or more wireless transceivers 270, which may be a Bluetooth® compliant transceiver or a WiFi compliant transceiver or an infrared transceiver. Wireless transceivers 270 are optional as shown in **Figure 2**.

Processing system 210 may optionally be coupled to cache 215. Processing system 210 may include one or more microprocessors, such as a microprocessor from Intel or IBM. Bus 205 interconnects these various components together in a manner which is known in the art. Typically, the input/output devices 250 are coupled to the system through input/output controllers.

Memory 220 may be implemented as dynamic RAM (DRAM) which provides fast access to data but requires power continually in order to refresh or maintain the data in memory 220. Non-volatile memory 230 may be a magnetic hard drive or other non-volatile memory which retains data even after power is removed from the system. While **Figure 2** shows that non-volatile memory 230 is a local device coupled directly to the rest of the components in the data processing system, it will be appreciated that other embodiments may utilize a non-volatile memory which is remote from a system, such as a network storage device, which is coupled to the data processing system through a network interface, such as a modem or an Ethernet interface.

Bus 205, as is well known in the art, may include one or more buses connected to each other through various bridges, controllers, and/or adapters as is known in the art. In one embodiment, I/O controller 250 may include a USB compliant adapter for controlling USB compliant peripherals and an IEEE-1394 controller for IEEE-1394 compliant peripherals.

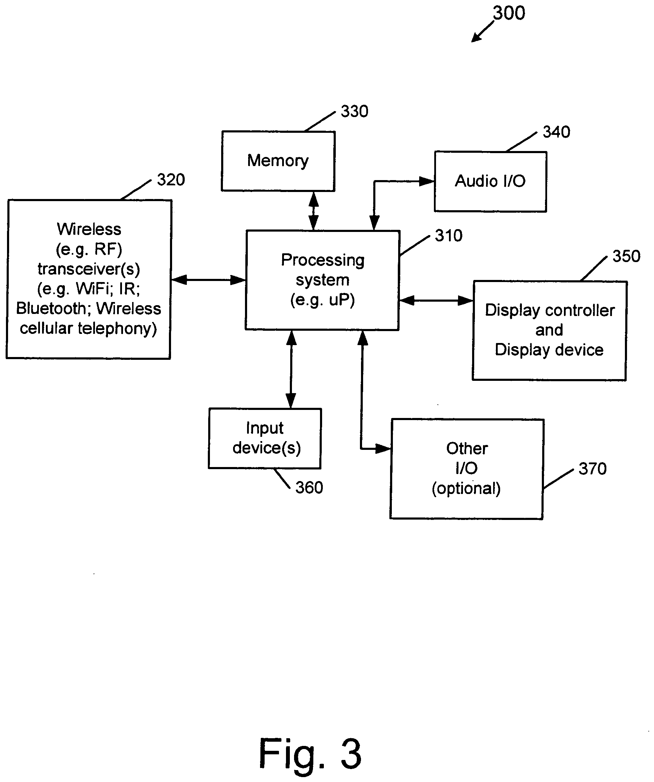

Aspects of the inventions described herein may be embodied, at least in part, in software. That is, the techniques may be carried out in a computer system or other data processing system in response to its processor or processing system executing sequences of instructions contained in a memory, such as memory 220 or non-volatile memory 230 or the memory 330 shown in **Figure 3**. In various embodiments, hardwired circuitry may be used in combination with the software instructions to implement the present inventions. Thus, the techniques are not limited to any specific combination of hardware circuitry and software or to any particular source for the instructions executed by the data processing system. In addition, throughout this description, various functions and operations are described as being performed by or caused by software code to simplify description. However, what is meant by such expressions is that the functions result from execution of the code by a processing system.

Dock 260 and/or wireless transceivers 270 provide a physical interface for coupling the data processing system shown in **Figure 2** to another data processing system, such as the data processing system shown in **Figure 3**, or to another data processing system which resembles the system shown in **Figure 2**. Dock 260 may provide both a mechanical and electrical connection between one data processing system and another data processing system to allow a synchronization process to be performed between the two systems. In other embodiments, wireless transceivers 270 may provide a radio frequency (RF) connection between the two systems for the purpose of a synchronization process without providing a mechanical connection between the two systems.

**Figure 3** is a block diagram of one embodiment of a data processing system, such as a client device, a handheld computer or other type of data processing system, such as the system shown in **Figure 2** or a system which is similar to that shown in **Figure 3**. Data processing system 300 includes processing system 310, which may be one or more microprocessors, or which may be a system on a chip integrated circuit. System 300 also includes memory 330 for storing data and programs for execution by processing system 310. System 300 also includes audio input/output subsystem 340 which may include a microphone and a speaker for, for example, playing back music or providing telephone functionality through the speaker and microphone.

Display controller and display device 350 provide a visual user interface for the user; this digital interface may include a graphical user interface which is similar to that shown on a Macintosh computer when running OS X operating system software. System 300 also includes one or more wireless transceivers, such as a WiFi transceiver, an infrared transceiver, a Bluetooth® compliant transceiver, and/or a wireless cellular telephony transceiver. Additional components, not shown, may also be part of system 300 in certain embodiments, and in certain embodiments fewer components than shown in **Figure 3** may also be used in a data processing system.

Data processing system 300 also includes one or more input devices 360 which are provided to allow a user to provide input to system 300. These input devices may be a keypad or a keyboard or a touch panel or a multi-touch panel. Data processing system 300 also includes optional input/output device 370 which may be a connector for a dock, such as dock 260 shown in **Figure 2**.

One or more buses, not shown, may be used to interconnect the various components as is known in the art. Data processing system 300 may be a handheld computer or a personal digital assistant (PDA), or a cellular telephone with PDA-like functionality, or a handheld computer which includes a cellular telephone, or a media player, such as an iPod, or devices which combine aspects or functions of these devices, such as a media player combined with a PDA and a cellular telephone in one device. In other embodiments, data processing system 300 may be a network computer or an embedded processing device within another device, or other types of data processing systems which have fewer components or perhaps more components than that shown in **Figure 3**.

At least certain embodiments of the inventions described herein may be part of a digital media player, such as a portable music and/or video media player, which may include a media processing system to present the media, a storage device to store the media and may further include a radio frequency (RF) transceiver (e.g., an RF transceiver for a cellular telephone) coupled with an antenna system and the media processing system. In certain embodiments, media stored on a remote storage device may be transmitted to the media player through the RF transceiver. The media may be, for example, one or more of music or other audio, still pictures, or motion pictures.

The portable media player may include a media selection device, such as a click wheel input device on an iPod® or iPod Nano® media player from Apple Inc. of Cupertino, CA, a touch screen input device, pushbutton device, movable pointing input device or other input device. The media selection device may be used to select the media stored on the storage device and/or the remote storage device.

The portable media player may, in at least certain embodiments, include a display device which is coupled to the media processing system to display titles or other indicators of media being selected through the input device and being presented, either through a speaker or earphone(s), or on the display device, or on both display device and a speaker or earphone(s). Examples of a portable media player are described in published U.S. patent application numbers 2003/0095096 and 2004/0224638, both of which are incorporated herein by reference.

In certain embodiments, data processing system 300 may be implemented in a small form factor which resembles a handheld computer having a tablet-like input device which may be a multi-touch input panel device which is integrated with a liquid crystal display. Examples of such devices are provided in U.S. Patent Application No. 11/586,862, filed October 24, 2006, and entitled "AUTOMATED RESPONSE TO AND SENSING OF USER ACTIVITY IN PORTABLE DEVICES," which is assigned to the same assignee as the instant application. This foregoing application is hereby incorporated herein by reference.

In the following description, various software components which are used for both synchronization and non-synchronization processing operations are described. It will be understood that in at least certain embodiments, these various software components may be stored in memory 220 and/or memory 230 shown in **Figure 2** for one type of data processing system, and in the case of a system such as that shown in **Figure 3**, these various different software components may be stored in the memory 330 which may include volatile memory as well as non-volatile memory, such as flash memory or a magnetic hard drive.

Having described a host device and a client device with example embodiments of each along with appropriate interconnections between devices, example packet formats, packet types, functionality and data flows are now described. As with the description above, the description that follows provides an example embodiment of a communications protocol. Variations on this protocol may also be supported.

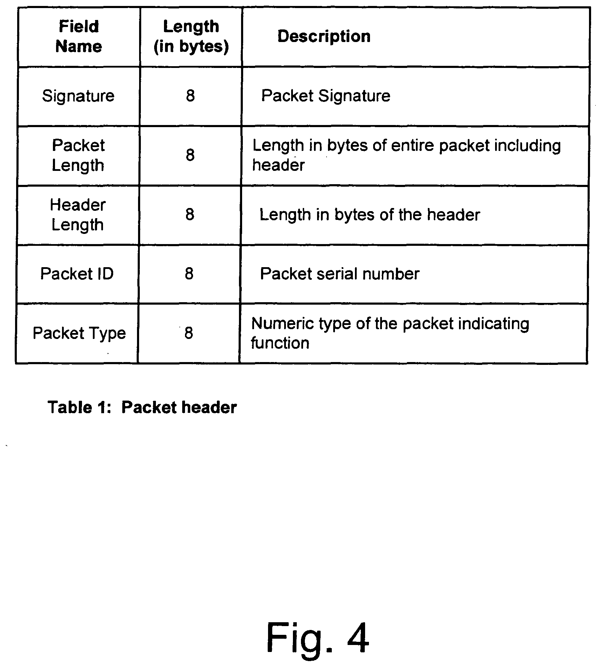

The table in **Figure 4** illustrates one embodiment of a packet header format. Other formats may also be used. While specific sizes and lengths are described other field names, lengths and/or descriptions may also be supported.

In one embodiment, packet data may be sent over the connection in either little-endian or big-endian format. In one embodiment, either device may send data in either format. The receiving device is responsible for swapping the data ordering, if necessary. In one embodiment, each packet must use a consistent endianness. In one embodiment, a predetermined (e.g., fixed) signature value (e.g., 0x4141504c36414643) may be used for all packet headers. The signature may allow the receiving device to determine the endianness of the data transmitted from the transmitting device. In one embodiment, the signature field is 8 bytes in length; however, other signature field sizes may also be supported.

The packet header may also include a field that indicates the length of the entire packet including the header. In one embodiment, the packet length field may be 8 bytes; however, other packet length field sizes may be supported, for example, to support different maximum packet sizes. The packet header may also include a field that indicates a packet serial number. The packet serial number may be utilized to order packets transmitted between host device 100 and client device 150. In one embodiment, the packet serial number field may be 8 bytes; however, other packet serial number field sizes may be supported.

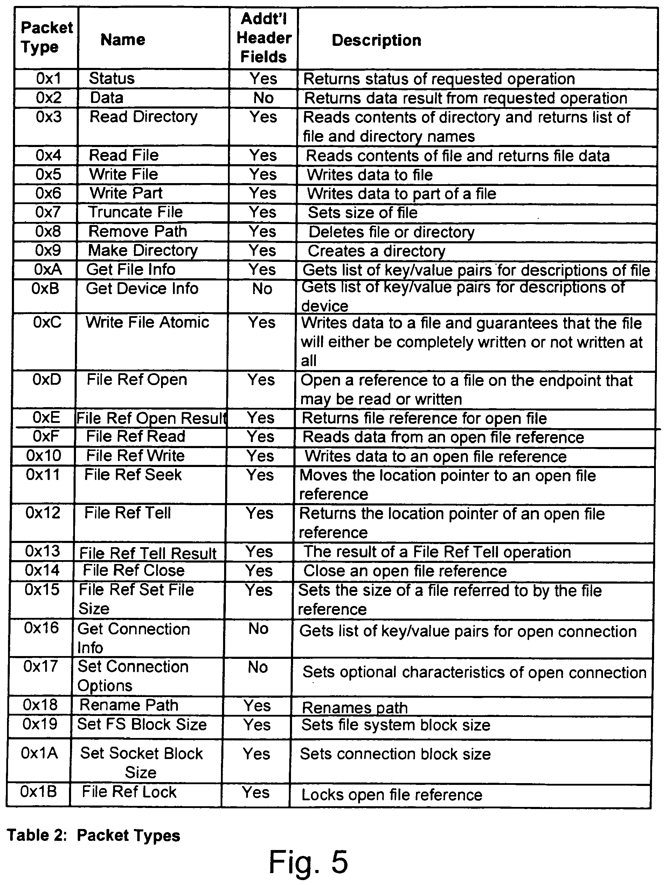

The packet header also includes a field for packet type. The packet type field includes a numerical indicator of the type of message in the packet, which indicates the function of the packet. One example listing of packet types and packet type values is provided in Figure 5. Other packet labels, other packet functionality and/or other packet type values may also be supported. In one embodiment, the packet type field may be 8 bytes; however, other packet type field sizes may be supported.

The table in **Figure 5** illustrates one embodiment of a set of packets that may be utilized to communicate between endpoints. Other and/or different packets may also be used. While specific packet type identifiers and packet names are described other packet type identifiers, packet names and/or descriptions may also be supported.

Various embodiments of the packets listed in Figure 5 are described in greater detail below. These packets descriptions provide examples of but one embodiment that may be provided. In one embodiment, each packet includes a standard packet header. This header may be formatted as illustrated in Figure 4.

The Status packet may be utilized to provide status information in response to a request packet. The status packet may also be utilized to provide error information in the event of a failure or other error condition. In one embodiment, the status packet is formatted according to the following table.

**Table 3: Status Packet**

| **Field Name** | **Length In bytes** | **Description** |
|---|---|---|
| Header | 40 | Standard packet header (See, for example, Figure 2) |
| Status | 8 | Status code representing the status of the requested operation. |

The Data packet may be utilized to carry data between the host electronic device and the client electronic device. In one embodiment, the data packet may be of any size. That is, the data packet may be the length of the header plus the data to be transmitted. In an alternate embodiment, the data packet may be a fixed length such that if the data to be transmitted exceeds the payload capacity of the data packet, one or more additional data packets may be utilized. In one embodiment, the data packet is formatted according to the following table.

**Table 4: Data Packet**

| **Field Name** | **Length In bytes** | **Description** |
|---|---|---|
| Header | 40 | Standard packet header (See, for example, Figure 2) |
| Data | Variable | Requested data/Data to be transmitted. |

The Read Directory packet may be utilized to read a directory on the target device. In one embodiment, the Read Directory packet is formatted according to the following table. The path string may be a path string in the appropriate format for the target device. For example, the path string may be a NULL-terminated Portable Operating System Interface for UNIX (POSIX) path string in UTF-8 format. Other formats may also be supported. The family of POSIX standards is formally designated as IEEE Std. 1003 and the international standard name is ISO/IEC 9945.

**Table 5: Read Directory Packet**

| **Field Name** | **Length In bytes** | **Description** |
|---|---|---|
| Header | 40 | Standard packet header (See, for example, Figure 2) |
| Path | Variable | Path string in appropriate format. |

The Read File packet may be utilized to read a complete file on the target device. In one embodiment, the result is provided in a Status packet or a Data packet. In one embodiment, the Read File packet is formatted according to the following table.

**Table 6: Read File Packet**

| **Field Name** | **Length In bytes** | **Description** |
|---|---|---|
| Header | 40 | Standard packet header (See, for example, Figure 2) |
| Offset | 8 | Offset form start of file to requested data. |
| Length | 8 | Length of data to be read from file. |
| Path | Variable | Path string in appropriate format. |

The Write File packet may be utilized to write a complete file to the target device. In one embodiment, the Write File packet is formatted according to the following table.

**Table 7: Write File Packet**

| **Field Name** | **Length In bytes** | **Description** |
|---|---|---|
| Header | 40 | Standard packet header (See, for example, Figure 2) |
| Path | Variable | Path string in appropriate format. |
| ***Data*** | ***Variable*** | ***Data to be written to file.*** |

The Write Part packet may be utilized to write data to a portion of a file on the target device. The Write Part packet may be stateless in that when the data from the packet is written, state data associated with the data and/or the file is not maintained. In one embodiment, the Write Part packet is formatted according to the following table.

**Table 8: Write Part Packet**

| **Field Name** | **Length In bytes** | **Description** |
|---|---|---|
| Header | 40 | Standard packet header (See, for example, Figure 2) |
| Offset | 8 | Offset from start of file start of write. |
| Path | Variable | Path string in appropriate format. |
| ***Data*** | ***Variable*** | ***Data to be written to file.*** |

The Truncate (Trunc) File packet may be utilized to set the length of a file. The length may be shorter than the corresponding data in which case some of the data is dropped, or the length may be greater than the corresponding data in which case the excess may be filled with a predetermined data pattern (e.g., all "0"). In one embodiment, the Trunc File packet is formatted according to the following table.

**Table 9: Trunc File Packet**

| **Field Name** | **Length In bytes** | **Description** |
|---|---|---|
| Header | 40 | Standard packet header (See, for example, Figure 2) |
| Length | 8 | Length of file. |
| Path | Variable | Path string in appropriate format. |

The Remove Path packet may be utilized to delete a file or directory on the target device. In one embodiment, the Remove Path packet is formatted according to the following table.

**Table 10: Remove Path Packet**

| **Field Name** | **Length In bytes** | **Description** |
|---|---|---|
| Header | 40 | Standard packet header (See, for example, Figure 2) |
| Path | Variable | Path string in appropriate format. |

The Make Directory packet may be utilized to create a directory on the target device. In one embodiment, the Remove Path packet is formatted according to the following table.

**Table 11: Make Directory Packet**

| **Field Name** | **Length In bytes** | **Description** |
|---|---|---|
| Header | 40 | Standard packet header (See, for example, Figure 2) |
| Path | Variable | Path string in appropriate format. |

The Get File Info packet may be utilized to retrieve information describing a file on the target device. In one embodiment, the file information is provided as one or more key/value pairs transmitted in a Data packet. The information describing the file may be, for example, file size, last modification date, permissions. Additional and/or different file information may also be provided. In one embodiment, the Get File Info packet is formatted according to the following table.

**Table 12: Get File Info Packet**

| **Field Name** | **Length In bytes** | **Description** |
|---|---|---|
| Header | 40 | Standard packet header (See, for example, Figure 2) |
| Path | Variable | Path string in appropriate format. |

The Get Device Info packet may be utilized to retrieve information describing the target device. In one embodiment, the device information is provided as one or more key/value pairs transmitted in a Data packet. The information describing the device may be, for example, device name, serial number, operating system version, battery level, free space available. Additional and/or different device information may also be provided. In one embodiment, the Get Device Info packet is formatted according to the following table.

**Table 13: Get Device Info Packet**

| **Field Name** | **Length In bytes** | **Description** |
|---|---|---|
| Header | 40 | Standard packet header (See, for example, Figure 2) |

The Write File Atomic packet may be utilized to write a file on the target device. The Write File Atomic packet guarantees that the whole file is written or that none of the file is written. The Write File Atomic packet may be used, for example, to write a database file. In one embodiment, the Write File Atomic packet is formatted according to the following table.

**Table 14: Write File Atomic Packet**

| **Field Name** | **Length In bytes** | **Description** |
|---|---|---|
| Header | 40 | Standard packet header (See, for example, Figure 2) |
| Path | Variable | Path string in appropriate format. |

The File Reference (Ref) Open packet may be utilized to obtain a token or other identifier to represent an open file on the target device. In one embodiment, the Write File Atomic packet is formatted according to the following table.

**Table 15: File Ref Open Packet**

| **Field Name** | **Length In bytes** | **Description** |
|---|---|---|
| Header | 40 | Standard packet header (See, for example, Figure 2) |
| Mode | 8 | Mode to use when opening file (See Table 16). |
| Path | Variable | Path string in appropriate format. |

In one embodiment, the Mode field includes a numeric indicator of a mode to use when opening the file. The Mode Name and Mode Value designations in Table 16 are examples for one embodiment. A different group of modes may be supported. Also, different mode values may be supported

**Table 16: Modes**

| **Mode Name** | **Mode Value** |
|---|---|
| Read Only | 1 |
| Read-Write | 2 |
| Write-Truncate | 3 |
| Read-Write-Truncate | 4 |
| Write-Append | 5 |
| Read-Write-Append | 6 |

In Read Only mode, the file may be opened for reading only. In Read-Write mode, the file may be opened for reading and writing only. In Write-Truncate mode, the file may be opened for writing or truncation. In Read-Write-Truncate mode, the file may be opened for reading, writing or truncation. In Write-Append mode, the file may be opened for writing or appending. In Read-Write-Append mode, the file may be opened for reading, writing or appending.

The File Ref Open Result packet may be utilized to return a file reference token that may be used in one or more of the packets described herein when accessing a file on the target device. In one embodiment, the File Ref Open Result packet is formatted according to the following table.

**Table 17: File Ref Open Result Packet**

| **Field Name** | **Length In bytes** | **Description** |
|---|---|---|
| Header | 40 | Standard packet header (See, for example, Figure 2) |
| File Ref | 8 | File Reference resulting from the File Ref Open operation |

The File Ref Read packet may be utilized to read a file using the file reference resulting from the File Ref Open operation. In one embodiment, the position within the file is automatically advanced in response to a File Ref Read operation. In one embodiment, the File Ref Read packet is formatted according to the following table.

**Table 18: File Ref Read Packet**

| **Field Name** | **Length In bytes** | **Description** |
|---|---|---|
| Header | 40 | Standard packet header (See, for example, Figure 2) |
| File Ref | 8 | File Reference resulting from the File Ref Open operation |
| Length | 8 | Length of data to read from file. |

The File Ref Write packet may be utilized to write to a file using the file reference resulting form the File Ref Open operation. In one embodiment, the position within the file is automatically advanced in response to a File Ref Write operation. In one embodiment, the File Ref Write packet is formatted according to the following table.

**Table 19: File Ref Write Packet**

| **Field Name** | **Length In bytes** | **Description** |
|---|---|---|
| Header | 40 | Standard packet header (See, for example, Figure 2) |
| File Ref | 8 | File Reference resulting from the File Ref Open operation |
| Data | Variable | Data to be written to file |

The File Ref Seek packet may be utilized to determine a location within a file using the file reference resulting from the File Ref Open operation. In one embodiment, the File Ref Seek packet is formatted according to the following table.

**Table 20: File Ref Seek Packet**

| **Field Name** | **Length In bytes** | **Description** |
|---|---|---|
| Header | 40 | Standard packet header (See, for example, Figure 2) |
| File Ref | 8 | File Reference resulting from the File Ref Open operation |
| Whence | 8 | Location to seek from. (See Table 21) |
| Offset | 8 | Offset from start of file to begin reading. |

In one embodiment, values in the Whence field may be used to indicate how the seek is to be performed. Table 21 provides an example of Whence values that may be used in a File Ref Seek packet.

**Table 21: Whence Values for use in File Ref Seek packet**

| **Whence Value** | **Description** |
|---|---|
| 0 | Seek to the absolute position specified by the Offset field. |
| 1 | Seek from the current position of the file. |
| 2 | Seek from the end of the file. |

The File Ref Tell packet may be utilized to determine a location within a file using the file reference resulting from the File Ref Open operation. In one embodiment, the File Ref Tell packet is formatted according to the following table.

**Table 22: File Ref Tell Packet**

| **Field Name** | **Length In bytes** | **Description** |
|---|---|---|
| Header | 40 | Standard packet header (See, for example, Figure 2) |
| File Ref | 8 | File Reference whose position will be returned. |

The File Ref Tell Result packet may be utilized to return the result of a File Ref Tell operation. In one embodiment, the File Ref Tell Result packet is formatted according to the following table.

**Table 23: File Ref Tell Result Packet**

| **Field Name** | **Length In bytes** | **Description** |
|---|---|---|
| Header | 40 | Standard packet header (See, for example, Figure 2) |
| Offset | 8 | The current position offset of the requested file reference. |

The File Ref Close packet may be utilized to close a file using the file reference resulting from the File Ref Open operation. In one embodiment, the File Ref Close packet is formatted according to the following table.

**Table 24: File Ref Close Packet**

| **Field Name** | **Length In bytes** | **Description** |
|---|---|---|
| Header | 40 | Standard packet header (See, for example, Figure 2) |
| File Ref | 8 | The File Ref of the file to be closed. |

The File Ref Set Size packet may be utilized to set the size of a file corresponding to the reference resulting from the File Ref Open operation. In one embodiment, the File Ref Set Size packet is formatted according to the following table.

**Table 25: File Ref Set Size Packet**

| **Field Name** | **Length In bytes** | **Description** |
|---|---|---|
| Header | 40 | Standard packet header (See, for example, Figure 2) |
| File Ref | 8 | The File Ref of the file to be closed. |
| File Size | 8 | The new size of the file in bytes. |

The File Ref Set Size packet may be utilized to set the length of a file. The length may be shorter than the corresponding data in which case some of the data is dropped, or the length may be greater than the corresponding data in which case the excess may be filled with a predetermined data pattern (e.g., all "0").

The Rename Path packet may be utilized to rename a directory path on the target device. In one embodiment, the Rename Path packet is formatted according to the following table.

**Table 26: Rename Path Packet**

| **Field Name** | **Length In bytes** | **Description** |
|---|---|---|
| Header | 40 | Standard packet header (See, for example, Figure 2) |
| Source Path | Variable | Path string in appropriate format for the path to be renamed. |
| Destination Path | Variable | Path string in appropriate format for the new path name. |

The path string may be a path string in the appropriate format for the target device. For example, the source and destination path strings may be a NULL-terminated POSIX path strings in UTF-8 format. Other formats may also be supported. In one embodiment, the destination path field immediately follows the source path field in the Rename Path packet.

The Set FS Block Size packet may be utilized to set a block size for the file system on the target device. In one embodiment, the Set FS Block Size packet is formatted according to the following table.

**Table 27: Set File System Block Size Packet**

| **Field Name** | **Length In bytes** | **Description** |
|---|---|---|
| Header | 40 | Standard packet header (See, for example, Figure 2) |
| Block Size | 8 | Block size for file system operations |

The block size may be utilized on by the client device file system. For example, with a block size of 64 kb, when writing file data to the client device, 64 kb of data would be written at a time even if the host device sends data in larger or smaller blocks. In one embodiment, the client device does not guarantee that data is written according to block size, but may be utilized for performance.

The Set Socket Block Size packet may be utilized to set a block size for the data connection between the target device and the host device. In one embodiment, the Set Socket Block Size packet is formatted according to the following table.

**Table 28: Set Socket Block Size Packet**

| **Field Name** | **Length In bytes** | **Description** |
|---|---|---|
| Header | 40 | Standard packet header (See, for example, Figure 2) |
| Block Size | 8 | Block size for communication between target and host |

The block size may be utilized by the client system to read and write data via the connection between the host device and the client device. For example, with a block size of 64 kb, when reading data from the connection, the client device may attempt to read data as 64 kb blocks. In one embodiment, the client device does not guarantee that data is processed according to block size, but may be utilized for performance.

The File Ref Lock packet may be utilized to lock an open file reference identifier against use by a second application. In one embodiment, the File Ref Lock packet is formatted according to the following table.

**Table 29: File Ref Lock Packet**

| **Field Name** | **Length In bytes** | **Description** |
|---|---|---|
| Header | 40 | Standard packet header (See, for example, Figure 2) |
| File Ref | 8 | The File Ref of the file to be locked. |
| Lock type | 8 | Type of lock to be applied to the file reference identifier |

The access to a file reference may be blocked so that only one application may have access to the opened file at a given time. In one embodiment, a shared lock, an exclusive lock and a non-blocking lock are supported. In alternate embodiments, additional and/or different locks are supported. In one embodiment, the lock is advisory only and an application must query the file to determine whether the file is locked or not. In one embodiment, multiple applications/processes may obtain a shared lock.

The messages and formats described above may be utilized to support a full file communication protocol. In the examples that follow a subset of the packets are used to illustrate uses of the protocol. Many other operations may also be supported.

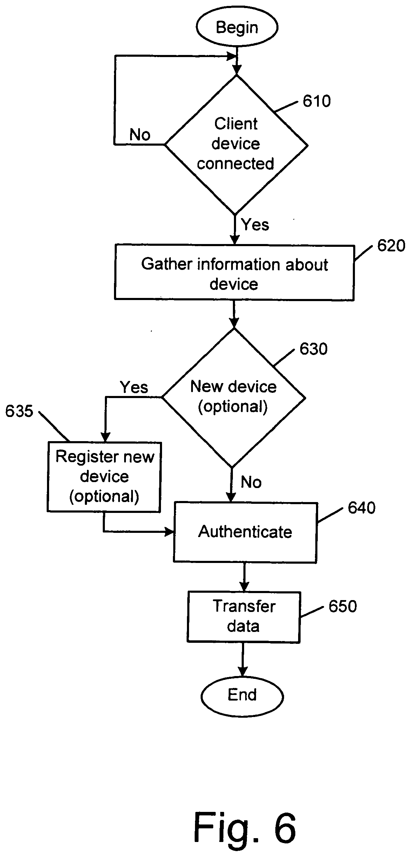

**Figure 6** is a flow diagram of one embodiment of a technique to transfer data to a client device. In the example of **Figure 6**, the host device may determine whether a client device has been connected to the host device, 610. As discussed above, the connection between the host device and the client device may be either wired or wireless.

The host device may detect the presence of the client device utilizing any suitable technique. For example, if the client device is connected with the host device via a wired connection, the host device may be configured to detect the physical connection of the client device to the wired interface. If the client device is connected with the host device via a wireless connection, the host device may be configured to respond to the completion of a pairing or other type of wireless connection procedure.

In one embodiment, if no client device is connected, 610, the host device may wait for a client device to be connected. In another embodiment, the host device may respond only if a request is received via the interface. For example, the wired interface may include a button to be pressed by a user to initiate communication between the client device and the host device. As another example, the client device may have a user interface that allows the user to request communications with the host device.

In response to connection of the client device, 610, the host device may gather information about the client device 620. Gathering of information about the client device may be accomplished by sending one or more of the packets discussed above. For example, the host device may send a Get Device Info packet and/or a Read Directory packet. The client device may respond to the packet(s) by providing the requested information to the host device.

Upon gathering sufficient information from the client device, the host device may determine whether the client device is a new device, 630. That is, the host device may determine whether the client device has ever been connected to the host device before. If the client device is a new device, the host device may perform a registration procedure, 635. The registration procedure can allow the host device to retain information about the client device that may be used, for example, for authentication, to expedite connections and/or for backup purposes.

The host device may authenticate the client device, 640. Authentication may be accomplished by, for example, exchange of keys or other identifiers between the host device and the client device. Other authentication techniques may also be used. In one embodiment, authentication is performed with corresponding sync services resident on the host device and the client device.

After authentication the host device may transfer data to the client device, 650, using the packets described herein. For example, to add a new file to the client device (e.g., load a new media file on the client device), the host device may use a Write File packet to cause the data to be written to a file on the client device. Any number of data transfer packets may be used in a single session.

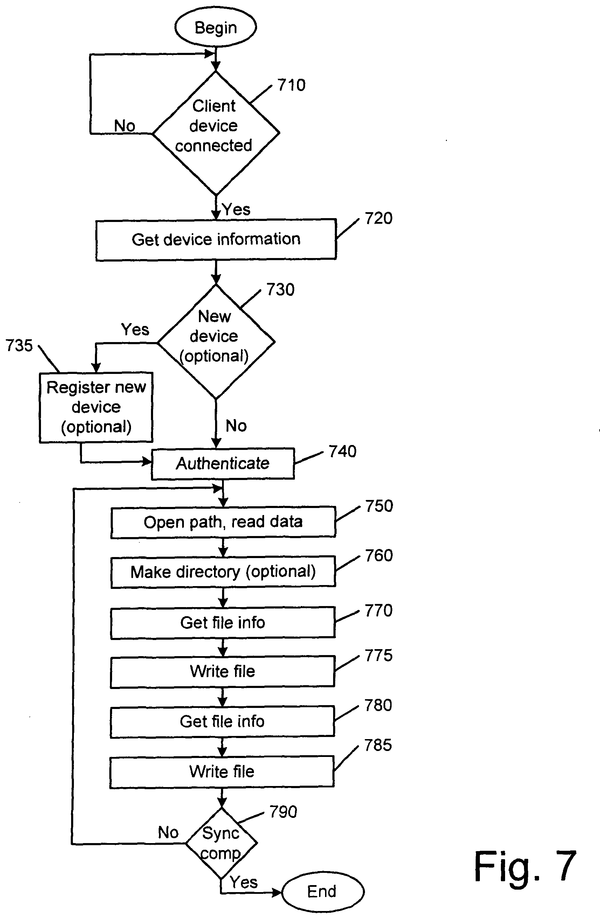

**Figure 7** is a flow diagram of one embodiment of a technique to synchronize data between a host device and a client device. The example of Figure 7 utilizes only a subset of the packet types discussed above. However, the example of Figure 7 is representative of a session that may occur between a host device and a client device utilizing the protocols and messages set forth herein.

In the example that follows, "->" indicates that the corresponding packet is transmitted from the host device to the client device and "<-" indicates that the corresponding packet is transmitted from the client device to the host device. The packet type is listed first and one or more fields in the packet are listed with example values with "<...>" indicating that additional fields are not shown in the example of Figure 7. The data section of a packet, if any, is indicated by "Data=..." A listing of packets is set forth first with an explanation of the session provided after the listing of packets.

```
               -> Get Device Info
               <- Data <Model=ABC123, Filesystem Size=1234, <...>>
                      Perform Optional Registration and/or Authentication
               -> File Ref Open <Path='/DeviceData.xml', Mode=Read>
               <- File Ref Open Result <FileRef=408>
               -> File Ref Read <FileRef=408, Length=8192>
               <- Data <Data=<...>>
               -> File Ref Close <FileRef=408>
               <- Status <Status=SUCCESS>
               -> Make Directory <Path='/media'>
               <- Status <Status=PATH_EXISTS>
               -> Get File Info <Path='/media/file1.mp3'>
               <- Data <Data=<...>>
               -> File Ref Open <Path='/media/file1.mp3',
               mode=WriteTrucate>
               <- File Ref Open Result <FileRef=831>
               -> File Ref Write <FileRef=831, Data=<...>>
               <- Status <Status=SUCCESS>
               -> File Ref Write <FileRef=831, Data=<...>>
               <- Status <Status=SUCCESS>
               -> File Ref Close <FileRef831>
               <- Status <Status=SUCCESS>
               -> Get File Info <Path='/media/file2.mp3'>
               <- Status <Status=PATH_DOES_NOT_EXIST>
               -> File Ref Open <Path='/media/file2.mp3',
               mode=WriteTrucate>
               <- File Ref Open Result <FileRef=831>
               -> File Ref Write <FileRef=831, Data=<...>>
               <- Status <Status=SUCCESS>
               -> File Ref Write <FileRef=831, Data=<...>>
               <- Status <Status=SUCCESS>
               -> File Ref Close <FileRef831>
               <- Status <Status=SUCCESS>
```

In the example of **Figure 7**, the host device may determine whether a client device has been connected to the host device, 710. As discussed above, the connection between the host device and the client device may be either wired or wireless.

The host device may detect the presence of the client device utilizing any suitable technique. For example, if the client device is connected with the host device via a wired connection, the host device may be configured to detect the physical connection of the client device to the wired interface. If the client device is connected with the host device via a wireless connection, the host device may be configured to respond to the completion of a pairing or other type of wireless connection procedure.

In one embodiment, if no client device is connected, 710, the host device may wait for a client device to be connected. In another embodiment, the host device may respond only if a request is received via the interface. For example, the wired interface may include a button to be pressed by a user to initiate communication between the client device and the host device. As another example, the client device may have a user interface that allows the user to request communications with the host device.

In response to connection of the client device, 710, the host device may gather information about the client device 720. Gathering of information about the client device may be accomplished by transmitting the Get Device Info packet from the host device to the client device and transmitting the Data packet from the client device to the host device. As discussed above, any type of information about the client device may be acquired by the host device in this manner. In the example of Figure 7, the client device provides at least a model identifier and a file system size to the host device. Additional and/or different data may also be provided.

Optionally, upon gathering sufficient information from the client device, the host device may determine whether the client device is a new device, 730. If the client device is a new device, the host device may perform an optional registration procedure, 735. The host device may authenticate the client device, 740. Authentication may be accomplished by, for example, exchange of keys or other identifiers between the host device and the client device. Other authentication techniques may also be used. In one embodiment, authentication is performed with corresponding sync services resident on the host device and the client device.

After authentication, the host device may begin synchronization of data between the host device and the client device. The client device may request a File Ref value corresponding to a path on the client device and read data in the path, 750. This may be accomplished by using, for example, the File Ref Open, File Ref Open Result, File Ref Read, Data packets listed above. If the requested directory does not exist, the directory may be created, 750. When the requested data has been acquired, the File Ref may be closed. This may be accomplished by using the File Ref Close and Status packets listed above.

A Make Directory packet may be utilized to determine whether a target path exists. For example, using the packets listed above, a Make Directory packet with the target of '/media' may be used to determine whether the 'media' directory exists. If the 'media' directory does exist, that Status packet from the client device may indicate the presence of the 'media' directory with a 'PATH_EXISTS' status.

File information may be requested for a first file to be updated (e.g., '/media/file1.mp3'). The Get File Info packet may be used to request information related to the first file to be updated, 770. The client device may use a Data packet to return data related to the first file to be updated.

The host device may then request a File Ref value to use while updating the first file. This may be accomplished using the File Ref Open packet with a response from the client device in a File Ref Open Result packet. The Host device may use the File Ref value to write data to the file on the client device, 775. This may be accomplished using the File Ref Write packet with confirmations from the client device carried by Status packets. When writing to the file is complete, the host device may use a File Ref Close packet to release the File Ref, which can be confirmed by a Status packet from the client device.

A Make Directory packet may be utilized to determine whether a target path for a second file to be updated exists. For example, using the packets listed above, a Get File Info packet with the target of '/media/file2.mp3' may be used to determine whether the 'file2.mp3' file exists and get information related to the file, 780. If, for example, the 'file2.mp3' file does not exist, the Status packet from the client device may return a 'PATH_DOES_NOT_EXIST' status.

The host device may then request a File Ref value to use while updating the second file. This may be accomplished using the File Ref Open packet with a response from the client device in a File Ref Open Result packet. The Host device may use the File Ref value to write data to the file on the client device, 785. This may be accomplished using the File Ref Write packet with confirmations from the client device carried by Status packets. When writing to the file is complete, the host device may use a File Ref Close packet to release the File Ref, which can be confirmed by a Status packet from the client device.

Any number of files may be updated in a similar manner. If the synchronization is not complete, 790, additional files may be updated as described above. If the synchronization is complete, 790, the synchronization session may be terminated.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

In the foregoing specification, the invention has been described with reference to specific embodiments thereof. The specification and drawings are, accordingly, to be regarded in an illustrative rather than a restrictive sense.

## Claims

1. A method for communicating between a host device and a client device comprising:
establishing, at one of the host device (100) and the client (150), a reliable stream transport connection between the host device (100) and the client device (150) over a communications link (145); and
synchronizing, with synchronizing services, data files (195) between the host device (100) and the client device (150) by transmitting, from one of the host device (100) and the client (150), packets according to the reliable stream transport over the communications link (145), wherein the packets include an indication of a packet type having a predetermined packet format corresponding to the packet type and a packet functionality associated with the packet type,
wherein the synchronizing services comprise changing the directories of the device receiving the packet and appending data to already existing data files in the device that receives the packet.

2. The method of claim 1 wherein the reliable stream transport connection comprises a Transmission Control Protocol (TCP) compliant connection.

3. The method of claim 2 wherein the communications link (145) comprises one of a Universal Serial Bus (USB) compliant wired interface or a BLUETOOTH compliant wireless interface or an IEEE 802.11 compliant wireless interface.

4. The method of claim 1 wherein the packet comprises a header having a packet signature field, a packet length field, a header length field, a packet serial number field and a packet type field.

5. The method of claim 1 wherein the indication of the packet type indicates a status packet comprising a header and a status field to provide status information in response to a request packet or error information in the event of an error condition, wherein the indication of the packet type indicates a data packet comprising a header and a data field to provide data to be transmitted between the host device (100) and the client device (150), and wherein the indication of the packet type indicates a read directory packet comprising a header and a directory field to indicate a directory to be read on the client device (150).

6. The method of claim 1 wherein the indication of the packet type indicates a read file packet comprising a header, an offset field to indicate a offset corresponding to a memory location to read, a length field to indicate an amount of the file to read from the offset and a path field to indicate a file to be read on the client device (150), and wherein the indication of the packet type indicates a write file packet comprising a header a path field to indicate a file to be written and a data field to with data to be written to the file on the client device (150).

7. The method of claim 1 wherein the indication of the packet type indicates a write part packet comprising a header, an offset field to indicate a offset corresponding to a memory location to write and a path field to indicate a file to be written on the client device (150), and wherein the indication of the packet type indicates a file truncate packet comprising a header, a length field to indicate a file length corresponding to a target file and a path field to indicate the target file on the client device (150).

8. The method of claim 1 wherein the indication of the packet type indicates a remove path packet comprising a header and a path field to indicate a file to be removed from the client device (150), and wherein the indication of the packet type indicates a create directory packet comprising a header and a path field to indicate a directory to be created on the client device (150).

9. The method of claim 1 wherein the indication of the packet type indicates a get file information packet comprising a header and a path field to indicate a file on the client device (150) for which information is to be gathered, wherein the information comprises key/value pairs corresponding to characteristics of the file.

10. The method of claim 1 wherein the indication of the packet type indicates a get device information packet comprising a header.

11. The method of claim 1 wherein the indication of the packet type indicates a write file atomic packet comprising a header and a path field to indicate a file to be written on the client device (150), wherein either the complete file is written to the client device (150) or none of the file is written to the client device (150).

12. The method of claim 1 wherein the indication of the packet type indicates a file reference open packet comprising a header, a mode field and a path field to indicate a location of a target file on the client device (150) and wherein the mode field stores an indication of a file access mode selected from the group of: read only mode, read-write mode, write-truncate mode, read-write-truncate mode, write-append mode, and read-write-append mode and wherein the indication of the packet type indicates a file reference open result packet comprising a header, a file reference field to store a file reference value associated with a target file on the client device (150) and wherein the indication of the packet type indicates a file reference read packet comprising a header, a file reference field to store a file reference value associated with a target file on the client device (150) and a length field to indicate a length of data to be read from the file and wherein the indication of the packet type indicates a file reference write packet comprising a header, a file reference field to store a file reference value associated with a target file on the client device (150) and a data field to store data to be written to the file and wherein the indication of the packet type indicates a file reference seek packet comprising a header, a file reference field to store a file reference value associated with a target file on the client device (150), a whence field to indicate a location from which to seek and a offset field to indicate an offset from the beginning of the target file and wherein the indication of the packet type indicates a file reference tell packet comprising a header, a file reference field to store a file reference value associated with a target file on the client device (150) for which an indication of a position on the client device (150) will be returned and wherein the indication of the packet type indicates a file reference tell result packet comprising a header and an offset field to store an offset position and wherein the indication of the packet type indicates a file reference close packet comprising a header, a file reference field to store a file reference value associated with a target file to be closed on the client device (150) and wherein the indication of the packet type indicates a file reference set size packet comprising a header, a file reference field to store a file reference value associated with a target file on the client device (150) and a file size field to indicate a size of the target file and wherein the indication of the packet type indicates a rename path packet comprising a header, a source path field to indicate the path on the client device (150) to be renamed and a destination path field to indicate a new name for the path on the client device (150) to be renamed and wherein the indication of the packet type indicates a set file system block size packet comprising a header and a file system block size field to indicate the block size of data to be written to memory by the client device (150) and wherein the indication of the packet type indicates a set file reference lock packet comprising a header and a file reference lock type to be used and wherein the indication of the packet type indicates a set socket block size packet comprising a header and a socket block size field to indicate the block size for data to be communicated between the host device (100) and the client device (150).

13. A machine readable storage medium having instructions which when executed cause a data processing system to perform a method as in any one of claims 1-12.

14. An apparatus comprising:
means for establishing, at one of a host device (100) and a client (150), a reliable stream transport connection between the host device (100) and the client device (150) over a communications link (145); and
means for synchronizing, with synchronizing services, data files (195) between the host device (100) and the client device (150) by transmitting, from one of the host device (100) and the client (150), packets according to the reliable stream transport over the communications link (145), wherein the packets include an indication of a packet type having a predetermined packet format corresponding to the packet type and a packet functionality associated with the packet type,
wherein the synchronizing services comprise changing the directories of the device receiving the packet and appending data to already existing data files in the device that receives the packet.

15. The apparatus of claim 14 wherein the packet comprises a header having a packet signature field, a packet length field, a header length field, a packet serial number field and a packet type field.

## Patentansprüche

1. Verfahren zum Kommunizieren zwischen einer Host-Vorrichtung und einer Client-Vorrichtung umfassend:
Aufbauen, bei der Host-Vorrichtung (100) oder dem Client (150), einer zuverlässigen Transport-Datenstrom-Verbindung zwischen der Host-Vorrichtung (100) und der Client-Vorrichtung (150) über eine Kommunikationsverbindung (145); und
Synchronisieren, mit Synchronisierungsdiensten, von Daten-Dateien (195) zwischen der Host-Vorrichtung (100) und der Client-Vorrichtung (150), durch Übermitteln, von der Host-Vorrichtung (100) oder von dem Client (150), von Paketen gemäß dem zuverlässigen Transport-Datenstrom über die Kommunikationsverbindung (145), wobei die Pakete eine Anzeige eines Paket-Typs beinhalten, der ein vorbestimmtes Paket-Format entsprechend dem Paket-Typ und eine Paket-Funktionalität, die mit dem Paket-Typ verknüpft ist, aufweist,
wobei die Synchronisierungsdienste ein Ändern der Verzeichnisse der Vorrichtung, die das Paket empfängt und ein Anhängen von Daten an bereits existierende Daten-Dateien in der Vorrichtung, die das Paket empfängt, umfassen.

2. Verfahren nach Anspruch 1, wobei die zuverlässige Transport-Datenstrom-Verbindung eine Transmission Control Protocol (TCP) konforme Verbindung umfasst.

3. Verfahren nach Anspruch 2, wobei die Kommunikationsverbindung (145) eine Universal Serial Bus (USB) konforme Kabelschnittstelle oder eine BLUETOOTH konforme Drahtlosschnittstelle oder eine IEEE 802.11 konforme Drahtlosschnittstelle umfasst.

4. Verfahren nach Anspruch 1, wobei das Paket eine Kopfzeile umfasst, die ein Paket-Signatur-Feld, ein Paket-Länge-Feld, ein Kopfzeile-Länge-Feld, ein Paket-Seriennummer-Feld und ein Paket-Typ-Feld aufweist.

5. Verfahren nach Anspruch 1, wobei die Anzeige des Paket-Typs ein Status-Paket anzeigt, das eine Kopfzeile und ein Status-Feld, um Statusinformationen in Antwort auf ein Anfragepaket oder eine Fehlerinformation im Falle einer Fehlerbedingung bereitzustellen umfasst, wobei die Anzeige des Paket-Typs ein Datenpaket anzeigt, das eine Kopfzeile und ein Daten-Feld, um Daten bereitzustellen, die zwischen der Host-Vorrichtung (100) und der Client-Vorrichtung (150) übermittelt werden sollen umfasst und wobei die Anzeige des Paket-Typs ein Leseverzeichnis-Paket anzeigt, das eine Kopfzeile und ein Verzeichnis-Feld, um ein zu lesendes Verzeichnis auf der Client-Vorrichtung (150) anzuzeigen umfasst.

6. Verfahren nach Anspruch 1, wobei die Anzeige des Paket-Typs ein Datei-Lesen-Paket anzeigt, das eine Kopfzeile, ein Versatz-Feld, um einen Versatz entsprechend einem zu lesenden Speicherort anzuzeigen, ein Längen-Feld, um einen Betrag der Datei anzuzeigen, der von dem Versatz gelesen werden soll, und ein Pfad-Feld, um eine auf der Client-Vorrichtung (150) zu lesende Datei anzuzeigen umfasst und wobei die Anzeige des Paket-Typs ein Datei-Schreiben-Paket anzeigt, das eine Kopfzeile, ein Pfad-Feld, um eine Datei anzuzeigen, die geschrieben werden soll und ein Datei-Feld um Daten, die auf die Datei auf der Client-Vorrichtung (150) geschrieben werden soll umfasst.

7. Verfahren nach Anspruch 1, wobei die Anzeige des Paket-Typs ein Teil-Schreiben-Paket anzeigt, das eine Kopfzeile, ein Versatz-Feld, um einen Versatz entsprechend eines Speicherortes, auf den geschrieben werden soll, anzuzeigen und ein Pfad-Feld, um eine Datei, die auf die Client-Vorrichtung (150) geschrieben werden soll anzuzeigen umfasst und wobei die Anzeige des Paket-Typs ein Datei-Abschneiden-Paket anzeigt, das eine Kopfzeile, ein Längen-Feld, um eine Dateilänge entsprechend einer Zieldatei anzuzeigen und ein Pfad-Feld, um die Zieldatei auf der Client-Vorrichtung (150) anzuzeigen umfasst.

8. Verfahren nach Anspruch 1, wobei die Anzeige des Paket-Typs ein Pfad-Entfernen-Paket anzeigt, das eine Kopfzeile und ein Pfad-Feld, um eine Datei, die von der Client-Vorrichtung (150) entfernt werden soll anzuzeigen umfasst und wobei die Anzeige des Paket-Typs ein Erzeuge-Verzeichnis-Paket anzeigt, das eine Kopfzeile und ein Pfad-Feld, um ein auf der Client-Vorrichtung (150) zu erzeugendes Verzeichnis anzuzeigen umfasst.

9. Verfahren nach Anspruch 1, wobei die Anzeige des Paket-Typs ein Datei-Information-Beziehen-Paket anzeigt, das eine Kopfzeile und ein Pfad-Feld, um eine Datei auf der Client-Vorrichtung (150) anzuzeigen, für welche Information gesammelt werden soll umfasst, wobei die Information Schlüssel/Wertpaare umfasst, die Charakteristiken der Datei entsprechen.

10. Verfahren nach Anspruch 1, wobei die Anzeige des Paket-Typs ein - Vorrichtungsinformation-Beziehen-Paket anzeigt, das eine Kopfzeile umfasst.

11. Verfahren nach Anspruch 1, wobei die Anzeige des Paket-Typs ein Dateiunteilbar-Schreiben-Paket anzeigt, das eine Kopfzeile und ein Pfad-Feld, um eine Datei, die auf die Client-Vorrichtung (150) geschrieben werden soll, anzuzeigen umfasst, wobei entweder die vollständige Datei auf die Client-Vorrichtung (150) geschrieben wird oder nichts der Datei auf die Client-Vorrichtung (150) geschrieben wird.

12. Verfahren nach Anspruch 1, wobei die Anzeige des Paket-Typs ein Datei-Referenz-Öffnen-Paket anzeigt, das eine Kopfzeile, ein Modus-Feld und ein Pfad-Feld, um einen Ort auf einer Zieldatei auf der Client-Vorrichtung (150) anzuzeigen umfasst und wobei das Modus-Feld eine Anzeige eines Datei-Zugang-Modus speichert, wobei der Datei-Zugang-Modus ausgewählt ist aus der Gruppe bestehend aus: Nur-Lesen-Modus, Lesen-Schreiben-Modus, Schreiben-Abschneiden-Modus, Lesen-Schreiben-Abschneiden-Modus, Schreiben-Anhängen-Modus, und Lesen-Schreiben-Anhängen-Modus und wobei die Anzeige des Paket-Typs ein Datei-Referenz-Öffnen-Ergebnis-Paket anzeigt, das eine Kopfzeile, ein Datei-Referenz-Feld, um einen Datei-Referenz-Wert, der mit einer Zieldatei auf der Client-Vorrichtung (150) verknüpft ist, zu speichern umfasst, und wobei die Anzeige des Paket-Typs ein Datei-Referenz-Lesen-Paket anzeigt, das eine Kopfzeile, ein Datei-Referenz-Feld, um einen mit einer Zieldatei auf der Client-Vorrichtung (150) verknüpften Datei-Referenz-Wert zu speichern und ein Längen-Feld, um eine Länge von zu lesenden Daten einer Datei anzuzeigen umfasst und wobei die Anzeige des Paket-Typs ein Datei-Referenz-Schreiben-Paket anzeigt, das eine Kopfzeile, ein Datei-Referenz-Feld, um einen mit einer Zieldatei auf der Client-Vorrichtung (150) verknüpften Datei-Referenz-Wert zu speichern und ein Daten-Feld, um Daten, die auf die Datei geschrieben werden sollen, zu speichern umfasst und wobei die Anzeige des Pakettyps ein Suche-Datei-Referenz-Paket anzeigt, wobei das Suche-Datei-Referenz-Paket eine Kopfzeile, ein Datei-Referenz-Feld, um einen Datei-Referenzwert, der mit einer Zieldatei auf der Client-Vorrichtung (150) verknüpft ist zu speichern, ein Woher-Feld, um einen Ort an welchem gesucht werden soll anzuzeigen und ein Versatz-Feld, um einen Versatz von dem Beginn der Zieldatei anzuzeigen umfasst und wobei die Anzeige des Paket-Typs ein Datei-Referenz-Mitteilen-Paket anzeigt, das eine Kopfzeile, ein Datei-Referenz-Feld, um einen Datei-Referenzwert, der mit einer Zieldatei auf der Client-Vorrichtung (150) verknüpft ist zu speichern, für welche eine Anzeige der Position auf der Client-Vorrichtung (150) zurückgegeben wird und wobei die Anzeige des Paket-Typs ein Datei-Referenz-Mitteilen-Ergebnis-Paket umfasst, das eine Kopfzeile und ein Versatz-Feld, um ein Versatz-Position zu speichern umfasst und wobei die Anzeige des Paket-Typs ein Datei-Referenz-Schließen-Paket anzeigt, das eine Kopfzeile, ein Datei-Referenz-Feld, um einen Dateireferenzwert, der mit einer Zieldatei, die auf der Client-Vorrichtung (150) geschlossen werden soll verknüpft ist zu speichern umfasst und wobei die Anzeige des Paket-Typs ein Datei-Referenz-Setze-Größe-Paket anzeigt, das eine Kopfzeile, ein Datei-Referenz-Feld, um einen Dateireferenzwert, der mit einer Zieldatei auf der Client-Vorrichtung (150) verknüpft ist zu speichern und ein Datei-Größe-Feld, um eine Größe der Zieldatei anzuzeigen umfasst und wobei die Anzeige des Paket-Typs ein Pfad-Umbenennen-Paket anzeigt, das eine Kopfzeile, ein Quell-Pfad-Feld, um den Pfad der Client-Vorrichtung (150) anzuzeigen, der umbenannt werden soll, und ein Ziel-Pfad-Feld, um einen neuen Namen für den Pfad auf der Client-Vorrichtung (150), der unbenannt werden soll, anzuzeigen umfasst und wobei die Anzeige des Paket-Typs ein Setze-Datei-System-Blockgröße-Paket anzeigt, das eine Kopfzeile und ein Datei-System-Blockgröße-Feld, um die Blockgröße von Daten, die auf den Speicher durch die Client-Vorrichtung (150) geschrieben werden sollen anzuzeigen umfasst und wobei die Anzeige des Paket-Typs ein Setze-Datei-Referenz-Schloss-Paket anzeigt, das eine Kopfzeile und einen Datei-Referenz-Schloss-Typ, der verwendet werden soll umfasst und wobei die Anzeige des Paket-Typs ein Setze-Socket-Blockgröße-Paket anzeigt, das eine Kopfzeile und ein Socket-Blockgröße-Feld, um die Blockgröße für Daten, die zwischen der Host-Vorrichtung (100) und der Client-Vorrichtung (150) kommuniziert werden sollen, anzuzeigen umfasst.

13. Maschinenlesbares Speichermedium, das Anweisungen aufweist, welche, wenn sie ausgeführt werden, ein Datenverarbeitungssystem dazu veranlassen, ein Verfahren nach irgendeinem der Ansprüche 1 bis 12 auszuführen.

14. Vorrichtung umfassend:
Mittel zum Einrichten, bei einer Host-Vorrichtung (100) oder einem Client (150), einer zuverlässigen Transport-Datenstrom-Verbindung zwischen der Host-Vorrichtung (100) und der Client-Vorrichtung (150) über eine Kommunikationsverbindung (145); und
Mittel zum Synchronisieren, mit Synchronisierungsdiensten, von Daten-Dateien (195) zwischen der Host-Vorrichtung (100) und der Client-Vorrichtung (150) durch Übermitteln, von der Host-Vorrichtung (100) oder der Client-Vorrichtung (150), von Paketen gemäß dem zuverlässigen Transport-Datenstrom über die Kommunikationsverbindung (145), wobei die Pakete eine Anzeige eines Paket-Typs beinhalten, der ein vorbestimmtes Paketformat entsprechend dem Paket-Typ und eine Paket-Funktionalität, die mit dem Paket-Typ verknüpft ist, aufweist,
wobei die Synchronisierungsdienste eine Änderung der Verzeichnisse der Vorrichtung, welche das Paket empfängt, und ein Anhängen von Daten an bereits existierende Daten-Dateien in der Vorrichtung, die das Paket empfängt, umfasst.

15. Vorrichtung nach Anspruch 14, wobei das Paket eine Kopfzeile umfasst, die ein Paket-Signatur-Feld, ein Paket-Länge-Feld, ein Kopfzeile-Länge-Feld, ein Paket-Seriennummer-Feld und ein Paket-Typ-Feld aufweist.

## Revendications

1. Un procédé de communication entre un dispositif hôte et un dispositif client, comprenant :
l'établissement, au niveau de l'un d'entre le dispositif hôte (100) et le dispositif client (150), d'une connexion de transport de flux fiable entre le dispositif hôte (100) et le dispositif client (150) via une liaison de communication (145) ; et
la synchronisation, avec des services de synchronisation, de fichiers de données (195) entre le dispositif hôte (100) et le dispositif client (150) par émission, à partir de l'un d'entre le dispositif hôte (100) et le dispositif client (150), de paquets selon le transport de flux fiable via la liaison de communication (145), les paquets incluant une indication d'un type de paquets ayant un format prédéterminé de paquets correspondant au type de paquets et une fonctionnalité de paquets associés au type de paquets,
dans lequel les services de synchronisation comprennent la modification des répertoires du dispositif recevant le paquet et l'annexion de données à des fichiers de données déjà existants dans le dispositif qui reçoit le paquet.

2. Le procédé de la revendication 1, dans lequel la connexion de transport de flux fiable comprend une connexion conforme au protocole de contrôle de transmission (TCP).

3. Le procédé de la revendication 2, dans lequel la liaison de communication (145) comprend l'une d'entre une interface filaire conforme au bus série universel (USB), ou une interface sans fil conforme à Bluetooth, ou une interface sans fil conforme à IEEE 802.11.

4. Le procédé de la revendication 1, dans lequel le paquet comprend un entête possédant un champ de signature de paquet, un champ de longueur de paquet, un champ de longueur d'entête, un champ de numéro de série de paquet et un champ de type de paquet.

5. Le procédé de la revendication 1, dans lequel l'indication du type de paquet indique un paquet de statut comprenant un entête et un champ de statut pour fournir une information de statut en réponse à un paquet de requête ou une information d'erreur dans le cas d'une situation d'erreur, dans lequel l'indication du type de paquet indique un paquet de données comprenant un entête et un champ de données pour fournir des données à transmettre entre le dispositif hôte (100) et le dispositif client (150), et dans lequel l'indication du type de paquet indique un paquet de lecture de répertoire comprenant un entête et un champ de répertoire pour indiquer un répertoire à lire sur le dispositif client (150).

6. Le procédé de la revendication 1, dans lequel l'indication du type de paquet indique un paquet de lecture de fichier comprenant un entête, un champ de décalage pour indiquer un décalage correspondant à un emplacement mémoire à lire, un champ de longueur pour indiquer une quantité du fichier à lire à partir du décalage et un champ de chemin pour indiquer un fichier à lire sur le dispositif client (150), et dans lequel l'indication du type de paquet indique un paquet d'écriture de fichier comprenant un entête, un champ de chemin pour indiquer un fichier à écrire et un champ de données pour indiquer des données à écrire dans le fichier sur le dispositif client (150).

7. Le procédé de la revendication 1, dans lequel l'indication du type de paquet indique un paquet d'écriture partielle comprenant un entête, un champ de décalage pour indiquer un décalage correspondant à un emplacement mémoire où écrire et un champ de chemin pour indiquer un fichier à écrire sur le dispositif client (150), et dans lequel l'indication du type de paquet indique un paquet de troncature de fichier comprenant un entête, un champ de longueur pour indiquer une longueur de fichier correspondant à un fichier cible et un champ de chemin pour indiquer le fichier cible sur le dispositif client (150).

8. Le procédé de la revendication 1, dans lequel l'indication du type de paquet indique un paquet de suppression de chemin comprenant un entête et un champ de chemin pour indiquer un fichier à supprimer du dispositif client (150), et dans lequel l'indication du type de paquet indique un paquet de création de répertoire comprenant un entête et un champ de chemin pour indiquer un répertoire à créer sur le dispositif client (150).

9. Le procédé de la revendication 1, dans lequel l'indication du type de paquet indique un paquet d'obtention d'information de fichier comprenant un entête et un champ de chemin pour indiquer un fichier sur le dispositif client (150) pour lequel une information doit être obtenue, dans lequel l'information comprend des paires clé/valeur qui correspondent à des caractéristiques du fichier.

10. Le procédé de la revendication 1, dans lequel l'indication du type de paquet indique un paquet d'obtention d'information de dispositif comprenant un entête.

11. Le procédé de la revendication 1, dans lequel l'indication du type de paquet indique un paquet d'écriture atomique de fichier comprenant un entête et un champ de chemin pour indiquer un fichier à écrire sur le dispositif client (150), dans lequel soit le fichier complet est écrit dans le dispositif client (150), soit aucun fichier n'est écrit dans le dispositif client (150).

12. Le procédé de la revendication 1, dans lequel l'indication du type de paquet indique un paquet d'ouverture de référence de fichier comprenant un entête, un champ de mode et un champ de chemin pour indiquer un emplacement d'un fichier cible sur le dispositif client (150) et dans lequel le champ de mode mémorise une indication d'un mode d'accès de fichier sélectionné dans le groupe comprenant : mode de lecture seule, mode de lecture-écriture, mode d'écriture-troncature, mode de lecture-écriture-troncature, mode d'écriture-annexion et mode de lecture-écriture-annexion, et dans lequel l'indication du type de paquet indique un paquet de résultat d'ouverture de référence de fichier comprenant un entête, un champ de référence de fichier pour mémoriser une valeur de référence de fichier associée à un fichier cible sur le dispositif client (150) et dans lequel l'indication du type de paquet indique un paquet de lecture de référence de fichier comprenant un entête, un champ de référence de fichier pour mémoriser une valeur de référence de fichier associée à un fichier cible sur le dispositif client (150) et un champ de longueur pour indiquer une longueur des données à lire dans le fichier et dans lequel l'indication du type de paquet indique un paquet d'écriture de référence de fichier comprenant un entête, un champ de référence de fichier pour mémoriser une valeur de référence de fichier associée à un fichier cible sur le dispositif client (150) et un champ de données pour mémoriser des données à écrire dans le fichier et dans lequel l'indication du type de paquet indique un paquet de recherche de référence de fichier comprenant un entête, un champ de référence de fichier pour mémoriser une valeur de référence de fichier associée à un fichier cible sur le dispositif client (150), un champ de provenance pour indiquer un emplacement à partir duquel rechercher et un champ de décalage pour indiquer un décalage par rapport au début du fichier cible et dans lequel l'indication du type de paquet indique un paquet de signalement de référence de fichier comprenant un entête, un champ de référence de fichier pour mémoriser une valeur de référence de fichier associée à un fichier cible sur le dispositif client (150) pour lequel sera retournée une indication d'une position sur le dispositif client (150) et dans lequel l'indication du type de paquet indique un résultat de signalement de référence de fichier comprenant un entête et un champ de décalage pour mémoriser une position de décalage et dans lequel l'indication du type de paquet indique un paquet de fermeture de référence de fichier comprenant un entête, un champ de référence de fichier pour mémoriser une valeur de référence de fichier associée à un fichier cible à fermer sur le dispositif client (150) et dans lequel l'indication du type de paquet indique un paquet d'établissement de taille de référence de fichier comprenant un entête, un champ de référence de fichier pour mémoriser une valeur de référence de fichier associée à un fichier cible sur le dispositif client (150) et un champ de taille de fichier pour indiquer une taille de fichier cible et dans lequel l'indication du type de paquet indique un paquet de renommage de chemin comprenant un entête, un champ de chemin source pour indiquer le chemin sur le dispositif client (150) à renommer et un champ de chemin de destination pour indiquer un nouveau nom pour le chemin à renommer sur le dispositif client et dans lequel l'indication du type de paquet indique un paquet d'établissement de taille de bloc de système de fichiers comprenant un entête et un champ de taille de bloc de système de fichiers pour indiquer la taille de blocs de données à écrire en mémoire par le dispositif client (150) et dans lequel l'indication du type de paquet indique un paquet d'établissement de verrouillage de référence de fichier comprenant un entête et un type de verrouillage de référence de fichier à utiliser et dans lequel l'indication du type de paquet indique un paquet d'établissement de taille de bloc de socket comprenant un entête et un champ de taille de bloc de socket pour indiquer la taille de bloc pour des données à communiquer entre le dispositif hôte (100) et le dispositif client (150).

13. Un support de stockage lisible par machine possédant des instructions qui lorsqu'elles sont exécutées font en sorte qu'un système de traitement des données mette en oeuvre un procédé selon l'une des revendications 1 à 12.

14. Un équipement comprenant :
des moyens d'établissement, au niveau de l'un d'entre un dispositif hôte (100) et un dispositif client (150), d'une connexion de transport de flux fiable entre le dispositif hôte (100) et le dispositif client (150) via une liaison de communication (145) ; et
des moyens de synchronisation, avec des services de synchronisation, de fichiers de données (195) entre le dispositif hôte (100) et le dispositif client (150) par émission, à partir de l'un d'entre le dispositif hôte (100) et le dispositif client (150), de paquets selon le transport de flux fiable via la liaison de communication (145), les paquets incluant une indication d'un type de paquets ayant un format prédéterminé de paquets correspondant au type de paquets et une fonctionnalité de paquets associés au type de paquets,
dans lequel les services de synchronisation comprennent la modification des répertoires du dispositif recevant le paquet et l'annexion de données à des fichiers de données déjà existants dans le dispositif qui reçoit le paquet.

15. L'équipement de la revendication 14, dans lequel le paquet comprend un entête possédant un champ de signature de paquet, un champ de longueur de paquet, un champ de longueur d'entête, un champ de numéro de série de paquet et un champ de type de paquet.
